Europäisches Patentamt

European Patent Office

Office européen des brevets

(19)

(11) Numéro de publication : **0 434 540 A1**

# (12) DEMANDE DE BREVET EUROPEEN

(21) Numéro de dépôt : **90403635.7**

(51) Int. Cl.⁵ : **B62D 25/16**

(22) Date de dépôt : **18.12.90**

(30) Priorité : **20.12.89 FR 8916877**

(43) Date de publication de la demande :
**26.06.91 Bulletin 91/26**

(84) Etats contractants désignés :
**DE ES GB IT NL**

(71) Demandeur : **FLEXEL LIMITED**
**Viking House, Nelson Street**
**Douglas, Isle of Man (GB)**

(72) Inventeur : **Bouquet, Paul**
**22, St. Andrew Street**
**London EC4 A3AN (GB)**

(74) Mandataire : **Ramey, Daniel et al**
**Cabinet Ores 6 Avenue de Messine**
**F-75008 Paris (FR)**

(54) **Garde-boue de véhicule routier, en particulier pour une roue arrière d'un tracteur de semi-remorque.**

(57)    Garde-boue constitué d'une partie centrale
(10) et de deux parties d'extrémité (12), ayant un
profil sensiblement elliptique, la partie centrale
(10) ayant un rayon de courbure moyen supérieur à celui des parties d'extrémité (12) qui sont
montées sur des tubes (32) solidaires du chassis du véhicule.
    L'invention s'applique notamment aux trac-
teurs à semi-remorque.

FIG.1

EP 0 434 540 A1

## GARDE-BOUE DE VEHICULE ROUTIER, EN PARTICULIER POUR UNE ROUE ARRIERE D'UN TRACTEUR DE SEMI-REMORQUE

L'invention concerne un garde-boue de véhicule routier, en particulier pour une roue arrière d'un tracteur de semi-remorque.

Les roues arrière des tracteurs de semi-remorques sont en général équipées de garde-boue amovibles, ayant une forme sensiblement semi-circulaire adaptée à celle de la roue qu'ils recouvrent et qui sont réalisés en une ou en trois parties. Les garde-boue en trois parties comprennent une partie centrale raccordée à deux parties d'extrémité qui sont montées sur des tubes transversaux de fixation, solidaires du chassis du tracteur. La partie centrale est fixée par vissage ou par clipsage sur les parties d'extrémité.

Ces garde-boue connus présentent un certain nombre d'inconvénients, car ils sont peu faciles à monter ou démonter, ou bien ils résistent mal aux vibrations et aux secousses, notamment lorsque la partie centrale est fixée par clipsage aux parties d'extrémité du garde-boue.

Par ailleurs, les opérations d'attelage et de dételage de la semi-remorque sur le tracteur se traduisent souvent par des chocs détériorant ces garde-boue. On a donc été amené à les réaliser, au moins pour ce qui est de leur partie centrale, en caoutchouc ou en élastomère relativement souple.

L'invention a pour objet un garde-boue de ce type, qui ne présente pas les inconvénients des garde-boue connus, et qui soit d'un montage rapide et aisé, résistant aux vibrations et aux secousses.

Elle propose, à cet effet, un garde-boue du type précité, comprenant une partie centrale raccordée à deux parties d'extrémité comportant des moyens de montage sur des tubes de fixation solidaires du chassis du véhicule, caractérisé en ce qu'il a un profil approximativement elliptique, la partie centrale ayant un rayon de courbure moyen supérieur à celui des parties d'extrémité.

Cette forme particulière du garde-boue permet d'augmenter le débattement entre la partie inférieure avant d'une semi-remorque et la partie centrale du garde-bout, de telle sorte que celui-ci risque moins d'être détérioré au cours des opérations d'attelage et de dételage de la semi-remorque.

Selon une autre caractéristique de l'invention, les parties d'extrémité du garde-boue sont en élastomère rigide, tandis que la partie centrale est en élastomère relativement souple ou semi-rigide dans sa zone médiane et est constituée à ses extrémités d'une combinaison rigide de deux élastomères.

La réalisation bi-matière de la partie centrale du garde-boue permet de donner à celle-ci une souplesse dans sa zone médiane et la rigidité voulue dans ses régions d'extrémité, par lesquelles elle est raccordée aux parties d'extrémité du garde-boue.

Avantageusement, la partie centrale et les parties d'extrémité du garde-boue comprennent des moyens de butée et d'ancrage coopérant entre eux pour assurer le positionnement et le blocage avec ou sans clipsage, par liaison de forme, de la partie centrale sur les parties d'extrémité.

De préférence, chaque partie d'extrémité comporte une face d'extrémité sensiblement plane sur laquelle sont formées des saillies s'emboitant, par pivotement de la partie d'extrémité sur le tube de fixation correspondant, dans des cavités de l'extrémité de la partie centrale.

Par ailleurs, les bords correspondants de la partie centrale et des parties d'extrémité peuvent comporter des plaques ou sur faces de recouvrement, permettant le montage de moyens de fixation tels que des boulons ou clips, assurant la solidarisation de la partie centrale et des parties d'extrémité.

On évite ainsi tout risque de démontage accidentel de la partie centrale.

Dans un mode de réalisation préféré de l'invention, les parties d'extrémité du garde-boue sont montées sur les tubes de fixation au moyen de bandes de serrage qui entourent les tubes et qui sont fixées aux parties d'extrémité par des boulons assurant également la mise sous tension desdites bandes.

L'invention sera mieux comprise et d'autres caractéristiques, détails et avantages de celle-ci, apparaîtront plus clairement à la lecture de la description qui suit, faite à titre d'exemple en référence aux dessins annexés, dans lesquels :

– la figure 1 est une vue de face d'un garde-boue selon l'invention, la demi-vue de gauche étant une vue extérieure, la demi-vue de droite étant une vue en coupe longitudinale ;

– la figure 2 est une vue de dessus du garde-boue de la figure 1 ;

– la figure 3 est une vue partielle agrandie, en coupe, selon la ligne III de la figure 2 ;

– la figure 4 est une vue partielle en coupe, selon la ligne IV de la figure 3 ;

– la figure 5 est une vue partielle agrandie en coupe selon la ligne V de la figure 2 ;

– la figure 6 est une vue partielle en perspective du garde-boue ;

– les figures 7, 8 et 9 sont des schémas illustrant le positionnement et le blocage de la partie centrale sur une partie d'extrémité du garde-boue ;

– les figures 10 et 11 sont des vues schématiques partielles, en coupe, de deux variantes de réalisation du garde-boue.

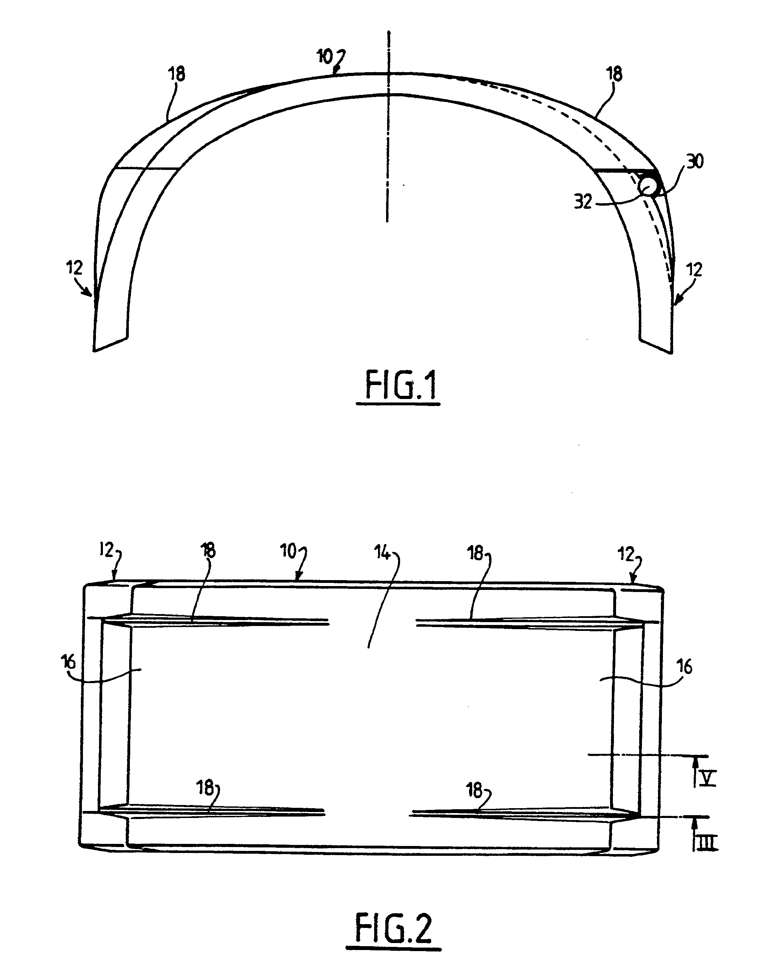

Le garde-boue selon l'invention, qui a été représenté schématiquement dans les figures 1 à 6, comprend essentiellement une partie centrale 10 et deux parties d'extrémité 12, identiques, qui sont raccordées aux extrémités de la partie centrale. Ce garde-boue a un profil sensiblement semi-elliptique, la partie centrale 10 ayant un rayon de courbure moyen qui est supérieur à celui des parties d'extrémité 12. Le garde-boue selon l'invention se distingue ainsi, de par cette forme légèrement aplatie, des garde-boue de la technique antérieure qui ont un profil sensiblement semi-circulaire.

La partie centrale 10 du garde-boue est réalisée en bi-matière, sa région médiane 14 étant en élastomère relativement souple ou semi-rigide tandis que ses régions d'extrémité 16 sont en une combinaison de deux élastomères dont l'un au moins est rigide, pour fournir une rigidité suffisante à ces régions d'extrémité 16. Les parties d'extrémité 12 du garde-boue sont en élastomère rigide.

Une certaine rigidité est conférée à la partie centrale 10 par des nervures longitudinales 18, dont la hauteur est sensiblement nulle dans la région médiane 14 de la partie centrale 10, et croît progressivement jusqu'aux extrémités de cette partie centrale.

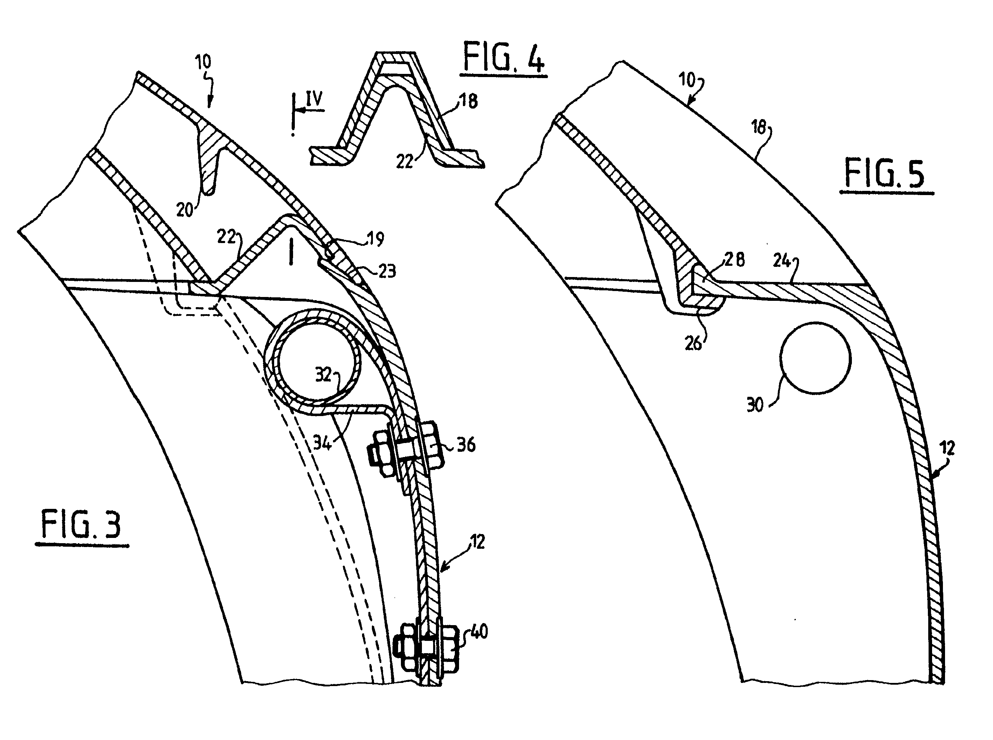

Comme on le voit sur les vues en coupe de la figure 3, ces nervures peuvent elles-mêmes être renforcées par des nervures transversales internes 20 au voisinage des extrémités de la partie centrale.

Ces nervures 18 sont, dans l'exemple représenté, creuses au moins à leurs extrémités, et forment ainsi des cavités susceptibles de recevoir des saillies 22 en forme de V agencées sur une face transversale d'extrémité 24 de chaque partie d'extrémité 12 du garde-boue.

A l'extrémité des nervures 18, sur leur face interne, sont prévues des arêtes 19 en surépaisseur, formant crans d'arrêt ou ergots. Ces crans viennent se loger dans des évidements 23 des saillies 22, pour bloquer en position les parties 10 et 12.

A chaque extrémité, la partie centrale 10 du garde-boue comprend un rebord transversal 26, qui s'étend sensiblement entre les nervures longitudinales 18 et qui a en section la forme d'un L ou d'un U ayant une branche plus courte que l'autre, pour recevoir un rebord correspondant 28 formé en saillie sur la face d'extrémité 24 de la partie 12 correspondante du garde-boue. Les formes des rebords 26 et 28 sont conjuguées l'une de l'autre, de telle sorte que le rebord 28 de la partie 12 puisse venir s'emboîter exactement dans le rebord 26 de la partie centrale 10, quand ces deux parties 10 et 12 sont correctement positionnées l'une par rapport à l'autre.

Les flancs des parties d'extrémité 12 comprennent des orifices 30 de passage de tubes horizontaux 32 de fixation, qui sont solidaires du chassis du tracteur et qui s'étendent au-dessus et de part et d'autre de chaque roue arrière de celui-ci.

Chaque partie 12 est montée et fixée sur le tube correspondant 32 au moyen d'au moins deux bandes de serrage 34 qui entourent au moins partiellement le tube 32 et qui sont fixées à la paroi de la partie 12 par des boulons 36 traversant leurs deux extrémités. Ces boulons 36 se trouvent relativement proches du tube 32, de telle sorte que le serrage de ces boulons se traduise par la mise sous tension des bandes 34 autour du tube 32.

Eventuellement, une extrémité de chaque bande 34 peut être solidarisée de la partie 12 par un second boulon 40, situé sous le premier.

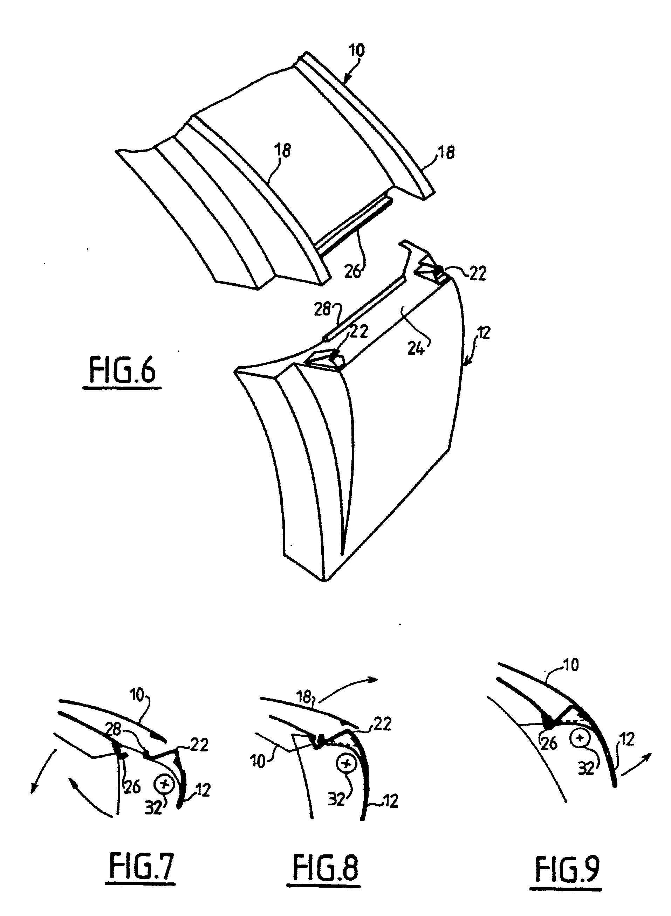

Le montage du garde-boue selon l'invention est simple et est représenté schématiquement dans les figures 7, 8 et 9.

On commence par monter chaque partie d'extrémité 12 sur le tube 32 correspondant, sans serrer complètement les bandes 34 de fixation sur ce tube. On pose ensuite la partie centrale 10 sur les deux parties d'extrémité 12 qui sont légèrement rabattues vers l'intérieur de la roue, comme indiqué schématiquement par les flèches en figure 7. On approche chaque extrémité de la partie centrale 10 d'une extrémité de la partie 12 correspondante, de façon à ce que les saillies 22 commencent à s'engager dans les extrémités des nervures 18, et que les rebords 28 commencent à s'engager dans les rebords 26 précités. Il suffit ensuite de relever chaque partie centrale 12 en la faisant pivoter sur le tube de fixation 32 comme indiqué par les flèches en figure 9, pour venir bloquer la partie centrale 10 sur les parties d'extrémité 12. Le serrage des bandes 34 sur les tubes 32, au moyen des boulons 36, immobilise en position les parties 12 du garde-boue et maintient le blocage de la partie centrale 10.

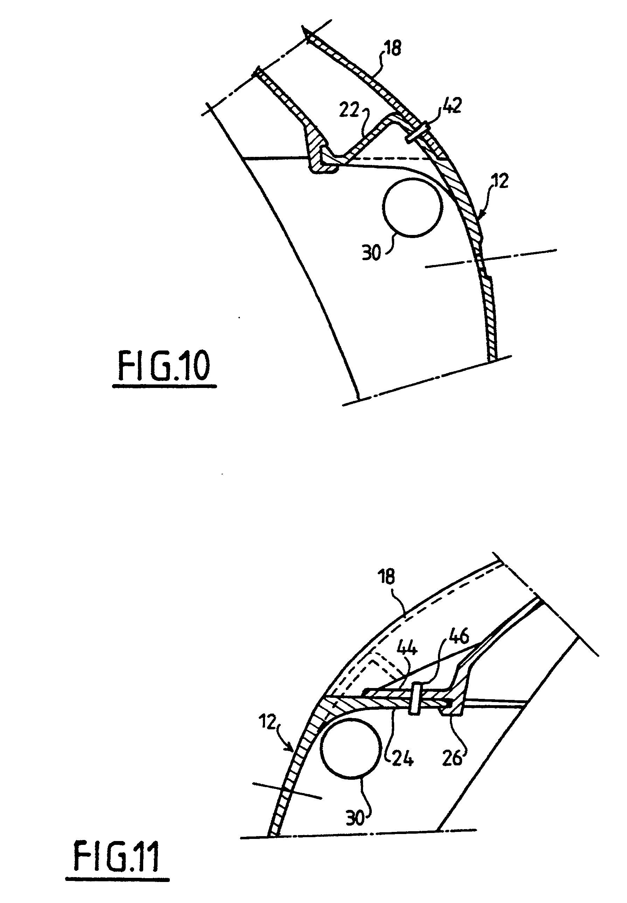

Si l'on veut solidariser mécaniquement la partie centrale 10 et les parties d'extrémité 12 du garde-boue, on peut utiliser l'une des deux variantes de réalisation représentées en figures 10 et 11 respectivement.

Dans la variante de réalisation de la figure 10, on a prévu que l'extrémité de chaque nervure 18, qui vient recouvrir une face d'une saillie 22, est solidarisée de cette saillie par un boulon 42 du type clipsable par exemple.

Dans la variante de réalisation de la figure 11, on prévoit de former à chaque extrémité de la partie centrale 10, une plaque 44 dans le prolongement d'une des ailes du rebord 26 précité, cette plaque 44 venant recouvrir la face transversale d'extrémité 24 de la partie 12 correspondante, et pouvant être solidarisée avec celle-ci au moyen d'un boulon 46.

Le démontage du garde-boue selon l'invention s'effectue en exécutant, dans l'ordre inverse, les opérations décrites en référence aux figures 7 à 9.

Les trois parties de ce garde-boue peuvent être réalisées simplement, par moulage par compression. On peut utiliser des élastomères d'un type courant, tels que du caoutchouc, et les caoutchoucs ou élastomères connus sous les dénominations EPDM et EVA ou encore un polyuréthane.

## Revendications

1. Garde-boue de véhicule routier, en particulier pour une roue arrière d'un tracteur de semi-remorque, comprenant une partie centrale (10) raccordée à deux parties d'extrémité (12) comportant des moyens de montage sur des tubes de fixation (32) solidaires du chassis du véhicule, caractérisé en ce qu'il a un profil approximativement elliptique, la partie centrale (10) ayant un rayon de courbure moyen supérieur à celui des parties d'extrémité (12).

2. Garde-boue selon la revendication 1, caractérisé en ce que les parties d'extrémité (12) sont en élastomère rigide, tandis que la partie centrale (10) est relativement souple ou semi-rigide dans sa région médiane (14) et est constituée à ses extrémités d'une combinaison rigide de deux élastomères.

3. Garde-boue selon la revendication 1 ou 2, caractérisé en ce que la partie centrale (10) et les parties d'extrémité (12) comprennent des moyens de butée et d'ancrage (18, 19, 22, 23, 26, 28) coopérant entre eux pour assurer le positionnement et le blocage avec ou sans clipsage, par liaison de forme, de la partie centrale (10) sur les parties d'extrémité (12).

4. Garde-boue selon la revendication 3, caractérisé en ce que chaque partie d'extrémité (12) comporte une face d'extrémité sensiblement plane (24) sur laquelle sont formées des saillies crantées (22) s'emboitant, par pivotement de la partie d'extrémité (12) sur le tube de fixation (32) correspondant, dans des cavités de l'extrémité de la partie centrale (10).

5. Garde-boue selon la revendication 4, caractérisé en ce que la partie centrale comprend à chaque extrémité des nervures longitudinales (18) de rigidification, comportant à leurs extrémités des cavités de réception et de blocage des saillies (22) formées sur les parties d'extrémité (12) du garde-boue.

6. Garde-boue selon l'une des revendications 3 à 5, caractérisé en ce que chaque extrémité de la partie centrale (10) comprend un rebord transversal (26) sur lequel vient s'appliquer un rebord transversal (28) de forme correspondante agencé sur la partie d'extrémité (12) du garde-boue.

7. Garde-boue selon l'une des revendications précédentes, caractérisé en ce que,les bords correspondants de la partie centrale (10) et des parties d'extrémité (12) comportent des plaques ou surfaces (44, 24) de recouvrement mutuel permettant le montage de moyens de fixation tels que des boulons ou clips (46), assurant la solidarisation de la partie centrale et des parties d'extrémité.

8. Garde-boue selon l'une des revendications précédentes, caractérisé en ce que ses parties d'extrémité (12) sont montées sur des tubes de fixation (32) au moyen de bandes de serrage (34) qui entourent les tubes et qui sont fixées aux parties d'extrémité par des boulons (36) assurant également la mise sous tension desdites bandes (34).

FIG.1

FIG.2

FIG.5

FIG.4

FIG.3

FIG.6

FIG.7

FIG.8

FIG.9

FIG.10

FIG.11

Office européen
des brevets

**RAPPORT DE RECHERCHE EUROPEENNE**

Numero de la demande

EP  90 40 3635

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| A | GB-A-1 218 911  (BOYDELL & SACHS)<br>* En entier * <br>--- | 1,2 | B 62 D  25/16 |
| A | EP-A-0 151 381  (IVECO)<br>* Revendications; figures * <br>--- | 1,2 | |
| A | GB-A-2 151 569  (FICHET)<br>* Revendications; figures * <br>----- | 1-4,8 | |
| | | | **DOMAINES TECHNIQUES RECHERCHES (Int. Cl.5)**<br><br>B 62 D |

Le présent rapport a été établi pour toutes les revendications

| Lieu de la recherche | Date d'achèvement de la recherche | Examinateur |
|---|---|---|
| LA HAYE | 19-03-1991 | PIRIOU J.C. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons

\& : membre de la même famille, document correspondant

EPO FORM 1503 03.82 (P0402)